# EUROPÄISCHE PATENTANMELDUNG

(11) **EP 2 957 606 A1**
(43) Veröffentlichungstag der Anmeldung: **23.12.2015**
(21) Anmeldenummer: 14172918.6
(22) Anmeldetag: 18.06.2014
(51) Int. Cl.: C09D 5/18, C08L 63/00, C08L 81/04, C08K 3/00

(54) **Brandschutz-Zusammensetzung und deren Verwendung**

(71) Anmelder: HILTI Aktiengesellschaft, 9494 Schaan (LI)
(72) Erfinder: Marauska, Juliane, 72766 Reutlingen (DE); Lang, Martin, 82152 Planegg (DE); Sebastian, Simon, 86807 Buchloe Lindenberg (DE)
(74) Vertreter: Hilti Aktiengesellschaft Corporate Intellectual Property

(57) **Zusammenfassung**

Es wird eine Zusammensetzung beschrieben, die ein Bindemittel auf Epoxy-Thiol-Basis enthält. Durch die erfindungsgemäße Zusammensetzung können in einfacher und schneller Weise Beschichtungen mit der für die jeweilige Feuerwiderstandsdauer erforderlichen Schichtdicke aufgetragen werden, wobei die Schichtdicke auf ein Minimum reduziert und dennoch eine gute Brandschutzwirkung erreicht werden kann. Die erfindungsgemäße Zusammensetzung eignet sich besonders für den Brandschutz, insbesondere als Beschichtung von Kabel und Kabeltrassen zur Erhöhung der Feuerwiderstandsdauer.

## Beschreibung

Die vorliegende Erfindung betrifft eine Zusammensetzung, insbesondere eine ablativ wirkende Zusammensetzung, die ein Bindemittel auf Epoxy-Thiol-Basis enthält, sowie deren Verwendung für den Brandschutz, insbesondere für die Beschichtung von Bauteilen, wie Stützen, Trägern, Fachwerkstäben, Dämmsystemen, z.B. Weichschotts, Kabel, Kabelbündeln oder Kabeltrassen zur Erhöhung der Feuerwiderstandsdauer.

Bei Bränden bilden Kabeltrassen aus mehreren Gründen besondere Gefahrenstellen. Zum einen tritt bei Bränden von mit Kunststoff isolierten Kabeln eine intensive Rauchentwicklung unter Emission schädlicher, z.T. giftiger Stoffe auf. Zum anderen kann sich entlang von Kabeltrassen ein Brand schnell ausbreiten und der Brand unter Umständen an eine vom ursprünglichen Brandherd weit entfernte Stelle gleitet werden. Bei Kabelanlagen besteht ferner das Problem, dass bei diesen Kabeln durch thermische Einwirkung oder Abbrand die Wirkung der Isolation nachlässt und durch Kurzschluss eine Unterbrechung des Stromflusses auftreten kann und damit die Kabel zerstört, bzw. funktionsuntüchtig werden.

Elektrische Kabel und Leitungen werden häufig in Fluren verlegt und von dort in die angrenzenden Räume unterteilt. Diese Flure dienen im Brandfall als Flucht- und Rettungswege, die bei Bränden von Kabelinstallationen durch Rauchentwicklung und toxische Brandgase unbenutzbar werden, wobei z. B. brennendes PVC stark korrosive Gase freisetzt. Kabelmassierungen stellen somit insbesondere im Industriebau, in Kraftwerksanlagen, in Krankenhäusern, Groß- und Verwaltungsbauten und generell in Gebäuden- mit hoher Installationsdichte ein erhebliches Gefahrenpotential dar. Die Kabelisolierungen sind in diesen Gebäuden oft die maßgebliche Brandlast und verursachen lang andauernde Brände mit Brandraumtemperaturen in ungünstigsten Fällen bis über 1000°C. Aus den genannten Gründen ist Kabeltrassen in Bezug auf Brandschutzmaßnahmen besondere Beachtung zu schenken.

Um diese Gefährdungen der fehlenden Funktionsfähigkeit der Kabel und der starken Brandlasterhöhung durch die Kabel zumindest zeitlich begrenzt zu verhindern, ist es bekannt, die Kabel durch unbrennbare Baustoffe der Baustoffklasse A1 oder A2 räumlich zu trennen, in dem die Kabel z.B. in Installations- und/oder Funktionserhaltkanälen verlegt werden. Dieses erfordert jedoch einen hohen Arbeitsaufwand. Zusätzlich entsteht ein hoher Raumbedarf durch aufwändige Konstruktionen, die zusätzlich zum Gewicht der Kabeltrasse noch das Gewicht der Installations- und/oder Funktionserhaltkanäle berücksichtigen müssen. Dazu werden häufig Kabel und Kabeltrassen mit isolierenden Materialien umwickelt, wie Aluminiumoxid-Silika-Matten oder Mineralwollmatten. Um einen ausreichenden Brandschutz zu erreichen, muss das Material sehr dick sein. Dies führt jedoch zu Problemen hinsichtlich der Abstände zwischen dem geschützten Gegenstand und benachbarten oder überlagerten Gegenständen. Darüber hinaus verursachen diese Materialien aufgrund ihrer thermischen Isoliereigenschaften Probleme bei Normalbetrieb. Eines dieser Probleme wird als "Herabsetzung der Strombelastbarkeit" bezeichnet. Dies bedeutet, dass die durch elektrische Kabel in dem Kabelrohr oder der Kabeltrasse erzeugte Wärme im Bereich der Isolierung nicht mehr abgeführt werden kann, was dazu führt, dass der in diesen Kabeln zulässige sichere Strombetriebspegel verringert wird oder dass eine Überhitzung der Kabel erfolgt. Diese Nachteile machen diese Art des Brandschutzes sehr unflexibel hinsichtlich deren Einsatzbereichs.

Zur Vermeidung dieser Nachteile ist es auch bekannt, für den Schutz elektrischer Kabel Beschichtungen aufzubringen, die im Brandfall unter thermischer Einwirkung intumeszieren, d.h. aufschäumen und so eine Dämmschicht bilden oder die durch physikalische und chemische Prozesse Wärme aufnehmen und so kühlend wirken.

Mit dämmschichtbildenden Beschichtungen ist es möglich, die Teilnahme von Kabeln am Brandgeschehen für 30 Minuten oder länger zu verhindern. Derartige beschichtete Kabel werden oft auf Kabeltrassen verlegt. Hierbei hat es sich jedoch gezeigt, dass bei vertikaler oder geneigter Anordnung der Kabeltrassen auch ein vollständig aufgeschäumter Dämmschichtbildner die Brandausbreitung ohne zusätzliche Maßnahmen nicht verhindern kann. Während der Erwärmung verformen sich die Kabel zwischen den Kabelschellen so stark, dass die Dämmschicht bildende Beschichtung aufreißt und teilweise abplatzt. Entstehender Schaum löst sich dabei ebenfalls von den Kabeln und fällt ab. Bei nach Verlegung der Kabel erfolgter Beschichtung sind die Kabel im Bereich der Schellenkonstruktionen nicht in vollem Umfang zugänglich. Dies hat zur Folge, dass bei vertikaler oder geneigter Anordnung der Kabeltrassen im Brandfall im Bereich der Schellenkonstruktionen nur ein Schaum geringer Dicke entsteht, der als Brandschutz für 30 Minuten nicht mehr ausreicht. Bei Verlegung von PVC-Kabeln treten daher wieder die im Brandfall bekannten Probleme auf.

Es ist auch bekannt, flammwidrig bzw. schwer entflammbar ausgerüstete halogenfreie Kabel zu verwenden, die nur schwer entflammbar und raucharm sind und nur eine geringe Brandweiterleitung besitzen. Diese Kabel sind jedoch sehr teuer und kommen daher nur unter extrem gefährdeten Bedingungen zum Einsatz.

Zur Vermeidung der Nachteile dämmschichtbildender Beschichtungen wurden bei Kabeltrassen Materialen auf die Kabel und Kabelhalterungen aufgebracht, die einen Ablationseffekt zeigen, d.h. unter Hitzeeinwirkung kühlend wirken und keramisieren, wie beispielsweise in der DE 196 49 749 A1 beschrieben. Hierin wird ein Verfahren zur Ausbildung eines Brandschutzes für brennbare oder hitzegefährdete Bauteile beschrieben, wobei die Bauteile mit einer Beschichtung versehen werden, die als Bindemittel ein anorganisches Material aus feingemahlenen hydraulischen Bindemitteln wie Calcium-Silicat, -Aluminat oder -Ferrit enthält, dem Ablativstoffe wie Aluminium- oder Magnesium-Hydroxid zugesetzt ist. Nachteil an dieser Maßnahme ist, dass einerseits das Aufbringen des den Ablationseffekt zeigenden Materials zeitintensiv ist und andererseits die Haftung des Materials an den Kabeln und den Kabelhalterungen ein Problem darstellt.

Andere derzeit auf dem Markt befindlichen Beschichtungssysteme, welche einige der oben erwähnten Nachteile nicht aufweisen sind einkomponentige Beschichtungszusammensetzungen auf der Basis von Polymerdispersionen, die sich endotherm zersetzende Verbindungen enthalten. Nachteilig an diesen Beschichtungen ist zum einen die relativ lange Trocknungsdauer der Beschichtung und damit einhergehende geringe Trockenschichtdicke, da diese Systeme physikalisch, d.h. durch Verdunstung des Lösungsmittels trocknen. Daher sind für dickere Beschichtungen mehrere nacheinander folgende Auftragungen erforderlich, was diese Systeme ebenfalls zeit- und arbeitsintensiv und daher unwirtschaftlich macht.

Der Erfindung liegt daher die Aufgabe zugrunde, ein ablativ wirkendes Beschichtungssystem der eingangs erwähnten Art zu schaffen, das die genannten Nachteile vermeidet, das insbesondere nicht lösemittel- oder wasserbasiert ist und eine schnelle Aushärtung aufweist, aufgrund entsprechend abgestimmter Viskosität einfach aufzutragen ist und aufgrund des erreichbaren hohen Füllgrades nur eine geringe Schichtdicke erfordert.

Diese Aufgabe wird durch die Zusammensetzung nach Anspruch 1 gelöst. Bevorzugte Ausführungsformen sind den Unteransprüchen zu entnehmen.

Gegenstand der Erfindung ist demnach eine Brandschutz Zusammensetzung mit einem Bestandteil A, der mindestens ein Epoxidharz enthält, mit einem Bestandteil B, der mindestens eine Thioverbindung als Härtungsmittel enthält, und mit einem Bestandteil C, der mindestens ein ablativ wirkendes Brandschutzadditiv enthält.

Die Zusammensetzung kann ferner einen Katalysator für die Reaktion zwischen dem Epoxidharz und der Thioverbindung enthalten, wodurch die Zusammensetzung bei niedrigen Temperaturen, etwa Raumtemperatur, hinreichend schnell verarbeitbar und aushärtbar wird.

Durch die erfindungsgemäße Zusammensetzung können in einfacher und schneller Weise Beschichtungen mit der für die jeweilige Feuerwiderstandsdauer erforderlichen Schichtdicke aufgetragen werden. Die durch die Erfindung erreichten Vorteile sind im Wesentlichen darin zu sehen, dass im Vergleich zu den Systemen auf Lösemittel- oder Wasserbasis mit ihren inhärenten langsamen Aushärtezeiten die Arbeitszeit erheblich reduziert werden kann.

Ein weiterer Vorteil liegt darin, dass die erfindungsgemäße Zusammensetzung einen hohen Füllgrad mit den Brandschutzadditiven aufweisen kann, so dass selbst mit dünnen Schichten eine große isolierende Wirkung erreicht wird. Der mögliche hohe Füllgrad der Zusammensetzung kann selbst ohne die Verwendung von leicht flüchtigen Lösungsmitteln erreicht werden. Dementsprechend sinkt der Materialaufwand, was sich insbesondere beim großflächigen Auftragen günstig auf die Materialkosten auswirkt. Erreicht wird dies insbesondere durch die Nutzung eines reaktiven Systems, das nicht physikalisch trocknet, sondern chemisch über eine Additionsreaktion härtet. Damit erleiden die Zusammensetzungen keinen Volumenverlust durch das Abtrocknen von Lösemitteln oder bei wasserbasierten Systemen von Wasser. So ist bei einem klassischen System ein Lösemittelgehalt von etwa 25% typisch. Dies bedeutet, dass aus einer 10 mm-Nassfilmschicht nur 7,5 mm als eigentliche Schutzschicht auf dem zu schützenden Substrat verbleiben. Bei der erfindungsgemäßen Zusammensetzung verbleiben mehr als 95% der Beschichtung auf dem zu schützenden Substrat.

Im Brandfall erweicht das Bindemittel und die darin erhaltenen Brandschutzadditive zersetzen sich abhängig von den verwendeten Additiven in einer endothermen physikalischen oder chemischen Reaktion unter Bildung von Wasser und inerten Gasen, was zum einen zur Kühlung des Substrats und zum anderen zur Verdünnung der brennbaren Gase oder durch Ausbilden einer Schutzschicht, die das Substrat vor Wärme- und Sauerstoffangriff schützt, führt und zum anderen die Ausbreitung des Feuers durch den Abbrand der Beschichtung verhindert.

Die erfindungsgemäße Zusammensetzung zeigt eine ausgezeichnete Haftung an unterschiedlichen Untergründen verglichen mit lösemittel- oder wasserbasierten Systemen, wenn diese ohne Grundierung aufgetragen werden, so dass sie universell eingesetzt werden können und nicht nur an den zu schützenden Leitungen sondern auch anderen Trägermaterialien haften.

Zum besseren Verständnis der Erfindung werden die folgenden Erläuterungen der hierin verwendeten Terminologie als sinnvoll erachtet. Im Sinne der Erfindung:
- bedeutet "*multifunktionell*", dass die entsprechende Verbindung mehr als eine funktionelle Gruppe pro Molekül aufweist; dementsprechend bedeutet multifunktionell im Zusammenhang mit Epoxidverbindungen, dass diese mehr als eine Epoxidgruppen pro Molekül aufweisen, und in Bezug auf Thiol-funktionalisierte Verbindungen, dass diese wenigstens zwei Thiolgruppen pro Molekül aufweisen; die Gesamtzahl der jeweiligen funktionellen Gruppen ist die Funktionalität der entsprechenden Verbindung;
- bedeutet "*Gerüst*" des Epoxidharzes oder der Thiol-funktionalisierten Verbindung der jeweils andere Teil des Moleküls, an das die funktionelle Epoxid- oder Thiolgruppe angebunden sein kann;
- bedeutet "*ablativ wirkend*", dass bei Einwirken erhöhter Temperaturen, d.h. oberhalb von 200°C, wie sie etwa im Brandfall auftreten können, eine Reihe von chemischen und physikalischen Reaktionen erfolgen, die Energie in Form von Wärme benötigen, wobei diese Energie der Umgebung entzogen wird; dieser Begriff wird gleichbedeutend mit dem Begriff *"endotherm zersetzend"* verwendet;
- ist ein "*Oligomer*" ein Molekül mit 2 bis 5 Wiederholungseinheiten und ist ein "*Polymer*" ein Molekül mit 6 oder mehr Wiederholungseinheiten und können Strukturen aufweisen, die linear, verzweigt, sternförmig, gewunden, hyperverzweigt oder vernetzt sind; Polymere können eine einzelne Art von Wiederholungseinheit aufweisen ("Homopolymere") oder sie können mehr als eine Art von Wiederholungseinheiten aufweisen ("Copolymere"). Wie hierin verwendet, ist "Harz" ein Synonym für Polymer.
- Bedeutet "*Epoxidäquivalentmasse*" diejenige Menge an Epoxidharz in [g], die ein Äquivalent [Val] Epoxidfunktionen besitzt und berechnet sich aus der Molmasse *M* in [g/Mol] dividiert durch die Funktionalität f in [Val/Mol]; (EEW [g/Val]).

Im Allgemeinen wird angenommen, dass das Umsetzen eines Epoxidharzes mit einer Funktionalität von zwei mit einer Thioverbindung, insbesondere Thiol-funktionalisierten Verbindung mit einer Funktionalität von zwei zu linearen molekularen Strukturen führen wird. Oftmals müssen molekulare Strukturen erzeugt werden, die verzweigt und/oder vernetzt sind, wofür wahrscheinlich die Verwendung von mindestens einem Inhaltsstoff mit einer Funktionalität von größer zwei erforderlich ist. Daher ist das Epoxidharz und/oder die Thioverbindung, insbesondere Thiol-funktionalisierte Verbindung bevorzugt multifunktionell, wobei das multifunktionelle Epoxidharz oder die multifunktionelle Thioverbindung, insbesondere multifunktionelle Thiol-funktionalisierte Verbindung oder beide stärker bevorzugt eine Funktionalität von größer zwei (> 2) haben.

Als Epoxidharz sind in der Epoxychemie übliche Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen. Grundlegende Informationen zu und Beispiele für Epoxidharze sind dem Kapitel "Epoxy Resins" der Encyclopedia of Polymer Sciences and Technology, Vol. 9, Wiley-Interscience, 2004, zu entnehmen. Als geeignete Epoxidharze seien beispielhaft erwähnt Reaktionsprodukte von Polyhydroxyverbindungen, insbesondere mehrwertige Phenole oder Phenol-Aldehyd-Kondensate, mit Epihalogenhydrinen oder deren Vorläufern, insbesondere:
a) Reaktionsprodukte von Epichlorhydrin mit Bisphenol A;
b) Reaktionsprodukte von Epichlorhydrin mit Bisphenol S
c) Epoxy-Novolake auf Phenol- oder Cresolbasis;
d) Aromatische Glycidylaminharze;
e) Epoxidharze ohne aromatische Struktureinheiten;
sowie Gemische zweier oder mehrerer derartiger Epoxidharze in beliebigem Verhältnis und in beliebigen Reinheitsgraden.

Als Epoxidharz besonders geeignet sind sogenannte Polyepoxid-Flüssigharze, im Folgenden als "Flüssigharz" bezeichnet. Diese weisen eine Glasübergangstemperatur auf, welche üblicherweise unterhalb von 25°C liegt, im Unterschied zu den sogenannten Festharzen, welche eine Glasübergangstemperatur oberhalb von 25°C aufweisen und sich zu bei 25°C schüttfähigen Pulvern zerkleinern lassen. Geeignete Verbindungen sind die Glycidylisierungsprodukte von:
- Dihydroxybenzol-Derivaten wie Resorcin, Hydrochinon und Brenzkatechin;
- weiteren Bisphenolen oder Polyphenolen wie Bis-(4-hydroxy-3-methylphenyl)-methan, 2,2-Bis-(4-hydroxy-3-methylyphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenyl-ethan, 1,4-Bis[2-(4-hydroxyphenyl)-2-propyl]-benzol) (Bisphenol-P), 1,3-Bis-[2-(4-hydroxyphenyl)-2-propyl]-benzol) (Bisphenol-M), 4,4'-Dihydroxydiphenyl (DOD), 4,4'-Dihydroxybenzophenon, Bis-(2-hydroxynaphth-1-yl)-methan, Bis-(4-hydroxynaphth-1-yl)-methan 1,5-Dihydroxy-naphthalin, Tris-(4-hydroxyphenyl)-methan, 1,1,2,2-Tetrakis-(4-hydroxyphenyl)-ethan Bis-(4-hydroxyphenyl)-ether, Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylen-bis-(1-methyl-ethyliden)]-bisanilin (Bisanilin-M);
- sowie Gemische zweier oder mehrerer derartiger Epoxidharze in beliebigem Verhältnis und in beliebigen Reinheitsgraden.

Weiter bevorzugt im Sinne der Erfindung sind Reaktionsprodukte von Epichlorhydrin mit Bisphenol A mit einem Epoxidäquivalentmasse (EEW) ≤ 550 g/Val; Reaktionsprodukte von Epichlorhydrin mit Bisphenol F, dem einfachsten Vertreter der Novolake, mit einem EEW ≤ 500 g/Val; beliebige Gemische dieser beiden Reaktionsprodukte, Reaktionsprodukte eines beliebigen Gemisches von Bisphenol A und Bisphenol F mit Epichlorhydrin, Epoxidharze wie Hydantoin-basierte Epoxidharze oder Diglycidylether von hydriertem Bisphenol A oder Bisphenol F; sowie Gemische zweier oder mehrerer derartiger Epoxidharze in beliebigem Verhältnis und in beliebigen Reinheitsgraden.

Besonders bevorzugt sind Reaktionsprodukte von Epichlorhydrin mit Bisphenol Amit einem EEW ≤ 330 g/Val; Reaktionsprodukte von Epichlorhydrin mit Bisphenol F, dem einfachsten Vertreter der Novolake, mit einem EEW ≤ 300 g/Val, beliebige Gemische dieser beiden Reaktionsprodukte, Reaktionsprodukte eines beliebigen Gemisches von Bisphenol A und Bisphenol F mit Epichlorhydrin mit einem EEW ≤ 330 g/Val, 5,5-Dimethyl-1,3-bis(2,3-epoxypropyl)-2,4-imidazolidindion; 2,2-Bis[4-(2,3-epoxypropoxy)-cyclohexyl]propan; sowie Gemische zweier oder mehrerer derartiger Epoxidharze in beliebigem Verhältnis und in beliebigen Reinheitsgraden.

Ganz besonders bevorzugt sind Reaktionsprodukte von Epichlorhydrin mit Bisphenol A mit einem EEW ≤ 200 g/Val, wie beispielsweise Epilox® A 17-01, Epilox® A 18-00, Epilox® A 19-00, Epilox® A 19-02, Epilox® A 19-03 oder Epilox® A 19-04 der Leuna-Harze GmbH, dargestellt durch die nachfolgende Formel, worin 0 ≤ n ≤ 0,2;

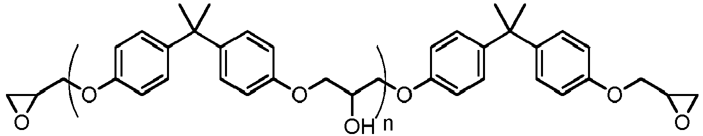

Reaktionsprodukte von Epichlorhydrin mit Bisphenol F, dem einfachsten Vertreter der Novolake, mit einem EEW ≤ 185 g/Val, wie beispielsweise Epilox® F 16-01 oder Epilox® F 17-00 der Leuna-Harze GmbH, dargestellt durch die nachfolgende Formel, worin 0 ≤ n ≤ 0,2; 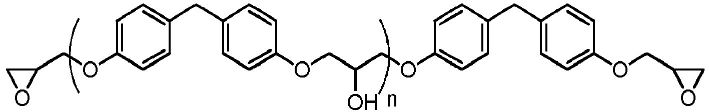 sowie Gemische zweier oder mehrerer derartiger Epoxidharze in beliebigem Verhältnis und in beliebigen Reinheitsgraden, wie beispielsweise Epilox® AF 18-30, Epilox® 18-50 oder Epilox® T 19-27 der Leuna-Harze GmbH, sowie Reaktionsprodukte eines beliebigen Gemisches von Bisphenol A und Bisphenol F mit Epichlorhydrin mit einem EEW ≤ 200 g/Val.

Als Epoxidharz eignet sich auch ein aliphatisches oder cycloaliphatisches Polyepoxid, wie beispielsweise:
- ein Glycidylether eines gesättigten oder ungesättigten, verzweigten oder unverzweigten, zyklischen oder offenkettigen C₂- bis C₃₀-Diols, wie beispielsweise Ethylenglykol, Propylenglykol, Butylenglykol, Hexandiol, Octandiol, ein Polypropylenglykol, Dimethylolcyclohexan, Neopentylglykol oder Dibromoneopentylglykol;
- ein Glycidylether eines tri- oder tetrafunktionellen, gesättigten oder ungesättigten, verzweigten oder unverzweigten, zyklischen oder offenkettigen Polyols wie Rizinusöl, Trimethylolpropan, Trimethylolethan, Pentaerythritol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.

Als Epoxidharz möglich sind auch ein Bisphenol A-, F- oder A/F-Festharz, welches ähnlich aufgebaut ist wie die bereits genannten Flüssigharze der obigen beiden Formeln, aber anstelle des Index n einen Wert von 2 bis 12 aufweist, und eine Glasübergangstemperatur oberhalb von 25°C aufweist.

Als Epoxidharz eignen sich schließlich auch Epoxidharze aus der Oxidation von Olefinen, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Je nach Funktionalität des Epoxidharzes können der Vernetzungsgrad des Bindemittels und somit zum einen die Festigkeit der entstehenden Beschichtung, als auch deren elastische Eigenschaften eingestellt werden.

Durch Zugabe mindestens eines Reaktivverdünners kann die Viskosität der Zusammensetzung entsprechend den Applikationseigenschaften eingestellt bzw. angepasst werden.

In einer Ausführungsform der Erfindung enthält die Zusammensetzung daher weitere epoxidgruppenhaltige Verbindungen als Reaktivverdünner, falls erforderlich. Diese Verbindungen enthalten eine oder mehrere Epoxidgruppen. Grundsätzlich kann jede niedrigviskose Verbindung, die mindestens eine Epoxidgruppe pro Molekül trägt, verwendet werden. Es können zwei oder mehrere unterschiedliche Reaktivverdünner kombiniert werden. Geeignete Beispiele sind Allylglycidylether, Butylglycidylether (BGE), 2-Ethylhexylglycidylether, Alkylglycidylether (C₁₂-C₁₄), Tridecylglycidylether, Phenylglycidylether (PGE), o-Kresolglycidylether (CGE), p-tert-Butylglycidylether, Resorcindiglycidylether (RDGE), 1,4-Butandioldiglycidylether (BDGE), 1,6-Hexandioldiglycidylether (HDGE), Cyclohexandimethanoldiglycidylether, Neopentylglycoldiglycidylether, Trimethylolpropantriglycidylether, Glycerintriglycidylether, Polypropylenglycoldiglycidylether sowie epoxidierte Pflanzenöle wie beispielsweise epoxidiertes Leinöl und epoxidiertes Rizinusöl.

Zweckmäßig kann als Härtungsmittel jede Thioverbindung verwendet werden, die mit Epoxidverbindungen reagieren kann. Bevorzugt handelt es sich dabei um Thiol-funktionalisierte Verbindungen, wobei die Thiol-Gruppe (-SH) die funktionelle Gruppe bildet.

Zweckmäßig kann als Thiol-funktionalisierte Verbindung jede Verbindung verwendet werden, welche über mindestens zwei Thiolgruppen verfügt. Jede Thiolgruppe ist dabei entweder direkt oder über einen Linker an ein Gerüst angebunden.

Die Thiol-funktionalisierte Verbindung der vorliegenden Erfindung kann über irgendeines einer breiten Vielzahl von Gerüsten verfügen, wobei diese gleich oder unterschiedlich sein können.

Erfindungsgemäß ist das Gerüst ein Monomer, ein Oligomer oder ein Polymer.

In einigen Ausführungsformen der vorliegenden Erfindung umfassen die Gerüste Monomere, Oligomere oder Polymere mit einem Molekulargewicht (Mw) von 50.000 g/mol oder weniger, bevorzugt 25.000 g/mol oder weniger, stärker bevorzugt 10.000 g/mol oder weniger, noch stärker bevorzugt 5.000 g/mol oder weniger, noch stärker bevorzugt 2.000 g/mol oder weniger, und am stärksten bevorzugt 1.000 g/mol oder weniger.

Als Monomere, die die als Gerüste geeignet sind, können beispielhaft Alkandiole, Alkylenglykole, Zucker, mehrwertige Derivate davon oder Gemische davon und Amine, wie Ethylendiamin und Hexamethylendiamin, und Thiole erwähnt werden. Als Oligomere oder Polymere, die als Gerüste geeignet sind, können folgende beispielhaft erwähnt werden: Polyalkylenoxid, Polyurethan, Polyethylenvinylacetat, Polyvinylalkohol, Polydien, hydriertes Polydien, Alkyd, Alkydpolyester, (Meth)acrylpolymer, Polyolefin, Polyester, halogeniertes Polyolefin, halogenierter Polyester, Polymercaptan, sowie Copolymere oder Gemische davon.

In bevorzugten Ausführungsformen der Erfindung ist das Gerüst ein mehrwertiger Alkohol oder ein mehrwertiges Amin, wobei diese monomer, oligomer oder polymer sein können. Stärker bevorzugt ist das Gerüst ein mehrwertiger Alkohol.

Als mehrwertige Alkohole, die als Gerüste geeignet sind, können dabei folgende beispielhaft erwähnt werden: Alkandiole, wie Butandiol, Pentandiol, Hexandiol, Alkylenglykole, wie Ethylenglykol, Propylenglykol und Polypropylenglykol, Glycerin, 2-(Hydroxymethyl)propan-1,3-diol,1,1,1-Tris(hydroxymethyl)ethan, 1,1,1-Trimethylolpropan, Di(trimethylolpropan), Tricyclodecandimethylol, 2,2,4-Trimethyl-1,3-pentandiol, Bisphenol A, Cyclohexandimethanol, alkoxylierte und/oder ethoxylierte und/oder propoxylierte Derivate von Neopentylglykol, Tertraethylenglykolcyclohexandimethanol, Hexandiol, 2-(Hydroxymethyl)propan-1,3-diol, 1,1,1-Tris(hydroxymethyl)ethan, 1,1,1-Trimethylolpropan und Rizinusöl, Pentaerythritol, Zucker, mehrwertige Derivate davon oder Gemische davon.

Als Linker können beliebige Einheiten, welche geeignet sind, Gerüst und funktionelle Gruppe zu verbinden, verwendet werden. Für Thiol-funktionalisierte Verbindungen ist der Linker bevorzugt ausgewählt unter den Strukturen (I) bis (XI).
1: Bindung zur funktionellen Gruppe
2: Bindung zum Gerüst

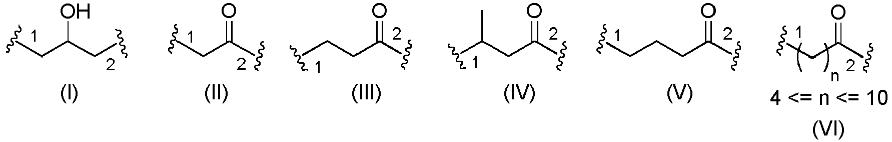

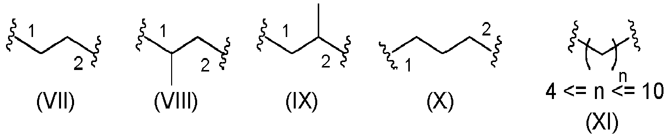

Als Linker für Thiol-funktionalisierte Verbindungen besonders bevorzugt sind die Strukturen (I), (II), (III) und (IV).

Besonders bevorzugte Thiol-funktionalisierte Verbindungen sind Ester der α-Thioessigsäure (2-Mercaptoacetate), β-Thiopropionsäure (3-Mercaptopropionate) und 3-Thiobuttersäure (3-Mercaptobutyrate) mit Monoalkoholen, Diolen, Triolen, Tetraolen, Pentaolen oder anderen Polyolen sowie 2-Hydroxy-3-mercaptopropylderivate von Monoalkoholen, Diolen, Triolen, Tetraolen, Pentaolen oder anderen Polyolen. Auch Gemische von Alkoholen können hierbei als Basis für die Thiol-funktionalisierte Verbindung verwendet werden. In dieser Hinsicht wird Bezug genommen auf die WO 99/51663 A1, deren Inhalt hiermit in diese Anmeldung aufgenommen wird.

Als besonders geeignete Thiol-funktionalisierte Verbindungen können beispielhaft erwähnt werden: Glykol-bis(2-mercaptoacetat), Glykol-bis(3-mercaptopropionat), 1,2-Propylenglykol-bis(2-mercaptoacetat), 1,2-Propylenglykol-bis(3-mercaptopropionat), 1,3-Propylenglykol-bis(2-mercaptoacetat), 1,3-Propylenglykol-bis(3-mercaptopropionat), Tris(hydroxymethyl)methan-tris(2-mercaptoacetat), Tris(hydroxymethyl)methan-tris(3-mercaptopropionat), 1,1,1-Tris(hydroxymethyl)ethan-tris(2-mercaptoacetat), 1,1,1-Tris(hydroxymethyl)ethan-tris(3-mercaptopropionat), 1,1,1-Trimethylolpropan-tris(2-mercaptoacetat), ethoxyliertes 1,1,1 -Trimethylolpropan-tris(2-mercaptoacetat), propoxyliertes 1,1,1-Trimethylolpropan-tris(2-mercaptoacetat), 1,1,1-Trimethylolpropan-tris(3-mercaptopropionat), ethoxyliertes 1,1,1-Trimethylolpropan-tris(3-mercaptopropionat), propoxyliertes Trimethylolpropan-tris(3-mercaptopropionat), 1,1,1-Trimethylolpropan-tris(3-mercaptobutyrat), Pentaerythritol-tris(2-mercaptoacetat), Pentaerythritol-tetrakis(2-mercaptoacetat), Pentaerythritol-tris(3-mercaptopropionat), Pentaerythritol-tetrakis(3-mercaptopropionat), Pentaerythritol-tris(3-mercaptobutyrat), Pentaerythritol-tetrakis(3-mercaptobutyrat), Capcure 3-800 (BASF), GPM-800 (Gabriel Performance Products), Capcure LOF (BASF), GPM-800LO (Gabriel Performance Products), KarenzMT PE-1 (Showa Denko), 2-Ethylhexylthioglykolat, iso-Octylthioglykolat, Di(n-butyl)thiodiglykolat, Glykol-di-3-mercaptopropionat, 1,6-Hexandithiol, Ethylenglykol-bis(2-mercaptoacetat) und Tetra(ethylenglykol)dithiol.

Die Thiol-funktionalisierte Verbindung kann alleine oder als Gemisch von zwei oder mehreren, unterschiedlichen Thiol-funktionalisierten Verbindungen eingesetzt werden.

Je nach Funktionalität der Thiol-funktionalisierten Verbindung können der Vernetzungsgrad des Bindemittels und somit zum einen die Festigkeit der entstehenden Beschichtung, als auch deren elastische Eigenschaften eingestellt werden.

In der Zusammensetzung der vorliegenden Erfindung kann der relative Anteil an Epoxidharzen zu Thiol-funktionalisierten Verbindungen durch das reaktive Äquivalentverhältnis, welches das Verhältnis der Anzahl aller Epoxidgruppen in der Zusammensetzung zu der Anzahl an Thiolgruppen in der Zusammensetzung ist, charakterisiert werden. Das reaktive Äquivalentverhältnis beträgt 0,1 bis 10:1, bevorzugt 0,2 bis 5:1, stärker bevorzugt 0,3 bis 3:1, noch stärker bevorzugt 0,5 bis 2:1 und noch stärker bevorzugt 0,75 bis 1,25:1.

Als zusätzliche Härterkomponente, auch als Co-Härtungsmittel bezeichnet, kann optional ein für Epoxidharze üblicher Aminhärter verwendet werden. Geeignete Beispiele können dem Kapitel "Epoxy Resins" der Encyclopedia of Polymer Sciences and Technology, Vol. 9, Wiley-Interscience, 2004, entnommen werden. Insbesondere haben sich aliphatische oder aromatische Amine, Amidoamine, Polyamide, Polyamin-Epoxidharzaddukte und/oder Ketimine bewährt. Die Aminhärter können einzeln oder als Gemisch zweier oder mehrerer Verbindungen eingesetzt werden. Beispiele sind Ethylendiamin, Propylendiamin, Hexamethylendiamin, Diethylentriamin (DETA), Tetraethylentetramin (TETA), Isophorondiamin (IPDA), *m*-Xylylendiamin (mXDA), *N*-Methylbenzylamin (NMB) oder die Ancamide^{®} (Air Products), Diethylaminopropylamin (DEAPA), *N-*Aminoethylpiperazin (N-AEP), Diaminodiphenylsulfon (DDS), 1,8-Diamino-*p*-menthan (MDA). Ebenso können Polyetheramine wie Jeffamine^{®} D-230 (Huntsman), Jeffamine^{®} D-400 (Huntsman), Jeffamine^{®} T-403 (Huntsman) verwendet werden.

Über ein entsprechend gewähltes Gemisch aus Thioverbindung, insbesondere Thiolfunktionalisierter Verbindung und Aminen als Härter für das Epoxidharz können die Beschichtungseigenschaften eingestellt werden.

Bevorzugt wird ein Katalysator für die Härtung, d.h. die Reaktion des Epoxidharzes mit der Thioverbindung, insbesondere Thiol-funktionalisierten Verbindung verwendet. Durch die Verwendung eines Katalysators werden Zusammensetzungen erhalten, die schnell, d.h. innerhalb von wenigen Minuten, und vollständig auch bei Raumtemperatur aushärten, was solche Zusammensetzungen sehr attraktiv für die Anwendung vor Ort, etwa auf der Baustelle macht.

Als Katalysatoren können die üblicherweise für Reaktionen zwischen Epoxidharzen und Thiol-funktionalisierten Verbindungen verwendeten Verbindungen, wie etwa tertiäre Amine, Aminophenole, Phenole, Phosphine und Phosphoniumsalze.

In einer bevorzugten Ausführungsform der Erfindung ist der Katalysator ausgewählt unter 2,4,6-Tris(dimethlaminomethyl)phenol, Bis(dimethylaminomethyl)phenol, Ancamine^{®} K-54 (AirProducts, Belgien), Benzyldimethylamin, N,N-Dimethylpropylamin, Bis(dimethylaminoethyl)ether, Bis-N,N-Dimethylethanolaminether, 1,3-Bis[3-(dimethylamino)propyl]harnstoff, 1,1,3,3-Tetramethylguanidin (TMG), 1,4-Diazabicyclooctan (DABCO), 2-(2-(2-Dimethylaminoethoxy)-ethylmethylamino)-ethanol, 1,8-Diazabicyclo[5.4.0]undec-7-en (DBU), 1,5-Diazabicyclo[4.3.0]non-5-en (DBN), N,N,N',N",N"-Pentamethyldiethylentriamin, Nonylphenol, 2-Ethyl-4-methylimidazol, Dimethylaminopyridin, 2,6-Dimethylpyridine, N,N-Bis-(2-hydroxyethyl)-3-methylaniline Dimethylphenylphosphin, Methyldiphenylphosphin, Trioctylphosphin, Triphenylphosphin, Triphenylphosphit, Tributylhexadecylphosphoniumbromid. In dieser Hinsicht wird Bezug genommen auf die WO 2012/08224 A1, deren Inhalt hiermit in diese Anmeldung aufgenommen wird. Der Katalysator kann optional bereits gelöst im Thiol vorliegen (z. B. GPM-888, GPM-891).

Die Wirkungsweise der erfindungsgemäßen ablativ wirkenden Zusammensetzung baut auf einer endothermen physikalischen und/oder chemischen Reaktion auf, wobei Stoffe, die bei deren Zersetzung große Mengen von Energie benötigen, in der Zusammensetzung enthalten sind. Wird die ausgehärtete Zusammensetzung erhöhter Temperatur, wie etwa im Brandfall der eines Feuers ausgesetzt, wird eine Reihe von chemischen und physikalischen Prozessen in Gang gesetzt. Diese Prozesse sind etwa die Freisetzung von Wasserdampf, Veränderung der chemischen Zusammensetzung und die Bildung nichtbrennbarer Gase, die den zur Verbrennung notwendigen Sauerstoff von der Kabeloberfläche fernhalten. All diese Prozesse benötigen eine große Menge Energie, die dem Feuer entzogen wird. Nachdem die Umwandlung aller organischen Bestandteile abgeschlossen ist, hat sich eine stabile Isolationsschicht aus anorganischen Bestandteilen gebildet, die eine zusätzliche isolierende Wirkung hat.

Erfindungsgemäß enthält der Bestandteil C daher mindestens ein ablativ wirkendes Brandschutzadditiv, wobei als Additiv sowohl einzelne Verbindungen als auch ein Gemisch von mehreren Verbindungen verwendet werden kann.

Zweckmäßig werden als ablativ wirkende Brandschutzadditive solche Materialien eingesetzt, die durch Wasserabspaltung, das etwa in Form von Kristallwasser eingelagert ist, und Wasserverdampfung energieverzehrende Schichten bilden. Die Wärmeenergie, die zur Abspaltung des Wassers aufgewendet werden muss, wird dabei dem Brand entzogen. Ferner werden solche Materialien eingesetzt, die sich bei Hitzeeinwirkung in einer endothermen Reaktion chemisch verändern bzw. zersetzen, verdampfen, sublimieren oder schmelzen. Dadurch werden die beschichteten Substrate gekühlt. Häufig werden bei der Zersetzung inerte, d.h. nicht brennbare Gase wie etwa Kohlendioxid freigesetzt, welche zusätzlich den Sauerstoff in unmittelbarer Umgebung des beschichteten Substrates verdünnen.

Als gasabspaltende Bestandteile eignen sich Hydroxide, wie Aluminiumhydroxid und Magnesiumhydroxid sowie deren Hydrate, die Wasser abspalten, sowie Carbonate, wie Calciumcarbonat, die Kohlendioxid abspalten. Basische Carbonate können sowohl Wasser als auch CO₂ abspalten. Bevorzugt ist eine Kombination von bei verschiedenen Temperaturen mit der Gasabspaltung beginnenden Bestandteilen. So beginnt die Wasserabspaltung bei Aluminiumhydroxid bereits bei ca. 200°C, wogegen die Wasserabspaltung von Magnesiumhydroxid bei ca. 350°C einsetzt, so dass die Gasabspaltung über einen größeren Temperaturbereich hinweg erfolgt.

Geeignete ablativ wirkende Materialien sind, bei Hitzeeinwirkung wasserabgebende anorganische Hydroxide oder Hydrate, wie solche von Natrium, Kalium, Lithium, Barium, Calcium, Magnesium, Bor, Aluminium, Zink, Nickel, ferner Borsäure und deren teilentwässerte Derivate.

Beispielhaft können folgende Verbindungen genannt werden: LiNO₃·3H₂O, Na₂CO₃H₂O (Thermonatrit), Na₂CO₃·7H₂O, Na₂CO₃·10H₂O (Soda), Na₂Ca(CO₃)₂·2H₂O (Pirssonit), Na₂Ca(CO₃)₂·5H₂O (Gaylussit), Na(HCO₃)Na₂CO₃·2H₂O (Trona), Na₂S₂O₃·5H₂O, Na₂O₃Si·5H₂O, KF·2H₂O, CaBr₂·2H₂O, CaBr₂·6H₂O, CaSO₄·2H₂O (Gips), Ca(SO₄)·½₂H₂O (Bassanit), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgSO₄·7H₂O (EP1069172A), Mg(OH)₂, Al(OH)₃, Al(OH)₃·3H₂O, AIOOH (Böhmit), Al₂[SO₄]₃·nH₂O mit n = 14 - 18 (US 4,462,831 B), gegebenenfalls im Gemisch mit AlNH₄(SO₄)₂·12H₂O (US5104917A), KAI(SO₄₎₂·12H₂O (EP1069172A), CaO·A1₂O_{3·}10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OH)₆(SO₄)(CO₃)12H₂O (Artinit), Mg₂(OH)₂CO₃·H₂O (Ettringit), 3CaO·Al₂O₃·3CaSO₄·32H₂O (Hydromagnesit), Mg₅(OH)₂(CO₃)₄·4H₂O (Hydrocalumit), Ca₄Al₂(OH)₁₄·6H₂O0 (Hydrotalkit), Mg₆Al₂(OH)ₗ₆CO₃·4H₂O Alumohydrocalcit, CaAl₂(OH)₄(CO₃)_{2·}3H₂O Scarbroit, Al₁₄(CO₃)₃(OH)₃₆ Hydrogranat, 3CaO·Al₂O_{3·}6H₂O Dawsonit, NaAl(OH)CO₃, wasserhaltige Zeolithe, Vermikulite, Colemanit, Perlite, Glimmer, Alkalisilikate, Borax, modifizierte Kohlen und Graphite, Kieselsäuren.

In einer bevorzugten Ausführungsform sind die hydrierten Salze ausgewählt aus der Gruppe bestehend aus Al₂(SO₄)·16-18H₂O, NH₄Fe(SO₄)₂·12H₂O, Na₂B₄O₇·10H₂O, NaAl(SO₄)₂·12H₂O, AlNH₄(SO₄)₂·12-24H₂O, Na₂SO₄·10H₂O, MhSO₄·7H₂O, (NH₄)₂SO₄·12H₂O; KAl(SO₄)₂·12H₂O, Na₂SiO₃·9H₂O, Mg(NO₂)₂·6H₂O, Na₂CO₃·7H₂O und Gemischen davon (EP1069172A).

Besonders bevorzugt sind Aluminiumhydroxid, Aluminiumhydroxidhydrate, Magnesiumhydroxid und Zinkborat, da sie eine Aktivierungstemperatur unterhalb 180°C haben.

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate, wie beispielsweise DOPO-HQ, DOPO-NQ, und Addukte. Solche Verbindungen sind beispielsweise beschrieben in S. V Levchik, E. D Weil, Polym. Int. 2004, 53, 1901-1929.

Das ablativ wirkende Brandschutzadditiv kann in einer Menge von 5 bis 99 Gew.-% in der Zusammensetzung enthalten sein, wobei die Menge im Wesentlichen von der Applikationsform der Zusammensetzung (Sprühen, Pinseln und dergleichen) abhängt. Um eine möglichst gute Isolation zu bewirken, wird der Anteil des Bestandteils C in der Gesamtformulierung so hoch wie möglich eingestellt. Bevorzugt beträgt der Anteil des Bestandteils C in der Gesamtformulierung 5 bis 85 Gew.-% und besonders bevorzugt 40 bis 80 Gew.-%.

Die Zusammensetzung kann neben den dämmschichtbildenden Additiven gegebenenfalls übliche Hilfsmittel, wie Lösungsmittel, etwa Xylol oder Toluol, Netzmittel, etwa auf Basis von Polyacrylaten und/oder Polyphosphaten, Entschäumer, wie Silikonentschäumer, Verdicker, wie Alginatverdicker, Farbstoffe, Fungizide, Weichmacher, wie chlorhaltige Wachse, Bindemittel, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive wie Verdicker, Rheologieadditive und Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan-Gummi.

Die erfindungsgemäße Zusammensetzung kann als Zwei- oder mehrkomponenten-System konfektioniert werden.

Wenn der Bestandteil A und der Bestandteil B ohne die Verwendung eines Katalysators bei Raumtemperatur nicht miteinander reagieren, können diese zusammen gelagert werden. Falls eine Reaktion bei Raumtemperatur eintritt, müssen der Bestandteil A und der Bestandteil B reaktionsinhibierend getrennt angeordnet werden. In Anwesenheit eines Katalysators muss dieser entweder getrennt von den Bestandteilen A und B gelagert werden, oder der Bestandteil, der den Katalysator enthält, muss getrennt von dem anderen Bestandteil gelagert werden. Hierdurch wird erreicht, dass die Härtungsreaktion erst unmittelbar vor der Anwendung auslöst wird. Dies macht das System einfacher in der Handhabung. Es ist somit denkbar, die beiden Bestandteile A und B in einer Komponente und den Katalysator in der anderen Komponente zu lagern, vorausgesetzt, die beiden Bestandteile A und B reagieren nicht ohne die Zugabe eines Katalysators miteinander.

In einer bevorzugten Ausführungsform der Erfindung ist die erfindungsgemäße Zusammensetzung als Zweikomponenten-System konfektioniert, wobei der Bestandteil A und der Bestandteil B reaktionsinhibierend getrennt angeordnet sind. Dementsprechend enthält eine erste Komponente, die Komponente I, den Bestandteil A und eine zweite Komponente, die Komponente II, den Bestandteil B. Hierdurch wird erreicht, dass die beiden Bestandteile A und B des Bindemittels erst unmittelbar vor der Anwendung miteinander gemischt werden und die Härtungsreaktion auslösen. Dies macht das System einfacher in der Handhabung.

Das mindestens eine Epoxidharz ist dabei bevorzugt in einer in einer Menge von 15 bis 95 Gew.-% in der Komponente I enthalten.

Wird ein Reaktivverdünner verwendet, so ist dieser in einer Menge von 90 bis 2 Gew.-%, bevorzugt 70 bis 3 Gew.-%, weiter bevorzugt 50 bis 4 Gew.-% und stärker bevorzugt 40 bis 5 Gew.-% in der Komponente I enthalten.

Die Thioverbindung, insbesondere Thiol-funktionalisierte Verbindung ist bevorzugt in einer Menge von 0,5 bis 90 Gew.-%, besonders bevorzugt in einer Menge von 2 bis 85 Gew.-% in der Komponente II enthalten.

Der Bestandteil C kann dabei als Gesamtmischung oder in Einzelkomponenten aufgeteilt in einer Komponente oder mehreren Komponenten enthalten sein. Die Aufteilung des Bestandteils C erfolgt abhängig von der Verträglichkeit der in der Zusammensetzung enthaltenen Verbindungen, so dass weder eine Reaktion der in der Zusammensetzung enthaltenen Verbindungen miteinander bzw. eine gegenseitige Störung erfolgen kann. Dies ist von den verwendeten Verbindungen abhängig. Hierdurch wird sichergestellt, dass ein möglichst hoher Anteil an Füllstoffen erzielt werden kann. Dies führt zu einer guten Kühlung, selbst bei geringen Schichtdicken der Zusammensetzung.

Die Zusammensetzung wird als Paste mit einem Pinsel, einer Rolle oder durch Sprühen auf das Substrat, welches metallisch sein kann, Kunststoff im Fall von Kabeltrassen oder Weichschotts aus Mineralwolle aufgebracht. Bevorzugt wird die Zusammensetzung mittels eines Airless-Sprühverfahrens aufgebracht.

Die erfindungsgemäße Zusammensetzung zeichnet sich, verglichen mit den lösemittel- und wasserbasierten Systemen, durch eine relativ schnelle Aushärtung durch eine Additionsreaktion und damit nicht notwendige physikalische Trocknung aus. Dies ist insbesondere dann sehr wichtig, wenn die beschichteten Bauteile schnell belastet bzw. weiterverarbeitet werden müssen, sei es durch Beschichtung mit einer Deckschicht oder ein Bewegen oder Transportieren der Bauteile. Auch ist die Beschichtung somit deutlich weniger anfällig gegenüber äußeren Einflüssen auf der Baustelle, wie z.B. Beaufschlagung mit (Regen)-wasser oder Staub und Schmutz, was in lösemittel- oder wasserbasierten Systemen zu einem Auswaschen von wasserlöslichen Bestandteilen führen kann, bzw. bei der Aufnahme von Staub zu einer reduzierten ablativen Wirkung. Durch die geringe Viskosität der Zusammensetzung trotz des hohen Feststoffanteils, der ohne die Zugabe leicht flüchtiger Lösemittel bis zu 99 Gew.-% in der Zusammensetzung betragen kann, bleibt die Zusammensetzung einfach zu verarbeiten, insbesondere durch gängige Sprühverfahren.

Deshalb ist die erfindungsgemäße Zusammensetzung insbesondere als Brandschutzbeschichtung, insbesondere sprühbare Beschichtung für Bauteile auf metallischer und nicht metallischer Basis geeignet. Die erfindungsgemäße Zusammensetzung findet vor allem im Baubereich als Beschichtung, insbesondere Brandschutzbeschichtung für einzelne Kabel, Kabelbündel, Kabeltrassen und Kabelkanäle oder andere Leitungen Verwendung sowie als Brandschutzbeschichtung für Stahlkonstruktionselemente, aber auch für Konstruktionselemente aus anderen Materialien, wie Beton oder Holz.

Ein weiterer Gegenstand der Erfindung ist daher die Verwendung der erfindungsgemäßen Zusammensetzung als Beschichtung, insbesondere als Beschichtung für Konstruktionselemente oder Bauelemente aus Stahl, Beton, Holz und anderen Materialien, wie etwa Kunststoffen, insbesondere als Brandschutzbeschichtung für einzelne Kabel, Kabelbündel, Kabeltrassen und Kabelkanäle oder andere Leitungen oder Weichschotts.

Die vorliegende Erfindung betrifft auch Objekte, die erhalten werden, wenn die erfindungsgemäße Zusammensetzung ausgehärtet ist. Die Objekte haben ausgezeichnete ablative Eigenschaften.

Die folgenden Beispiele dienen der weiteren Erläuterung der Erfindung.

### AUSFÜHRUNGSBEISPIELE

Für die Herstellung von erfindungsgemäßen ablativ wirkenden Zusammensetzungen verwendet man die nachfolgend aufgelisteten Bestandteile. Es werden jeweils die Einzelkomponenten mit Hilfe eines Dissolvers vermengt und homogenisiert. Für die Anwendung werden diese Mischungen dann entweder vor dem Versprühen oder während des Versprühens vermischt und appliziert.

Zur Bestimmung der Brandschutzeigenschaften wurde die ausgehärtete Zusammensetzung einer Prüfung nach EN ISO 11925-2 unterzogen. Die Prüfung erfolgt in einem zugfrei aufgestellten Brennkasten Mitsubishi FR-D700SC Electric Inverter. Bei der Prüfung wird im Winkel von 45° eine Kleinbrennerflamme für 30 s auf die Probenoberfläche gerichtet, dies entspricht einer Flächenbeflammung.

Es werden jeweils Proben mit den Abmessungen 11 cm x 29,5 cm und einer Anwendungsdicke von 1 mm verwendet. Diese Proben härteten bei Raumtemperatur aus und wurden drei Tage bei 40°C gealtert.

Nach der Alterung von drei Tagen bei 40°C erfolgt die Überprüfung von Entzündlichkeit und Höhe der angegriffenen Fläche.

Die Aushärtungszeit und der Aushärtungsverlauf wurden bestimmt. Dabei wurde mit einem Spatel getestet, wann die Aushärtung der Beschichtung startet.

Für die folgenden Beispiele 1 und 2 wurde als Bestandteil C Aluminiumtrihydrat (HN 434 der J.M. Huber Corporation, Finnland) verwendet, wobei jeweils 18 g davon verwendet wurden.

### Beispiel 1

### Bestandteil A

| **Bestandteil** | **Menge [g]** |
|---|---|
| Epilox F 16-01 ¹⁾ | 31,2 |
| Durcal 5 ²⁾ | 36,0 |

| | |
|---|---|
| 1) niedermolekulares Epoxidharz auf Bisphenol F Basis (Viskosität (25°C) 1200-1600 mPas (DIN 53 015); Epoxidäquivalent 157-167 g/Äquiv. (DIN 16 945)) ²⁾ Calciumcarbonat, gemahlen | |

### Bestandteil B

| **Bestandteil** | **Menge [g]** |
|---|---|
| Glycoldi(3-mercaptopropionat) | 11,5 |
| Pentaerythritaltetra(3-mercaptopropionat) | 15,7 |
| Ancamine K54 ³⁾ | 1,8 |
| Durcal 5 | 36,1 |

| | |
|---|---|
| ³⁾ Pentaerythritoltetra(3-mercaptopropionat) | |

### Beispiel 2

### Bestandteil A

| **Bestandteil** | **Menge [g]** |
|---|---|
| Epilox F 18-30 ⁴⁾ | 28,8 |
| Heloxy Modifier HD ⁵⁾ | 4,9 |
| Durcal 5 | 36,1 |

| | |
|---|---|
| ⁴⁾ Epoxidharz auf Bisphenol A/F Basis (Viskosität (25°C) 4000-6000 mPas (DIN 53 015); Epoxidäquivalent 170-180 g/Äquiv. (DIN 16 945)) ⁵⁾ Hexandioldiglycidylether | |

### Bestandteil B

| **Bestandteil** | **Menge [g]** |
|---|---|
| Pentaerythritol tetra(3-mercaptopropionat) | 25,8 |
| Ankamine K54 | 0,6 |
| Durcal 5 | 36,0 |

### Vergleichsbeispiel 1

Als Vergleich diente ein auf wässriger Dispersionstechnologie (Acrylatdispersion) basiertes kommerzielles Brandschutzprodukt (Hilti CFP SP-WB).

**Tabelle 1: Ergebnisse der Bestimmung der Aushärtungszeit**

| | **Vergleichsbeispiel 1** | **Beispiel 1** | **Beispiel 2** |
|---|---|---|---|
| Aushärtungszeit | 24 h | 20 min | 1 h |

## Patentansprüche

1. Brandschutz-Zusammensetzung mit einem Bestandteil A, der mindestens ein Epoxidharz enthält, mit einem Bestandteil B, der mindestens eine Thioverbindung als Härtungsmittel enthält, und mit einem Bestandteil C, der mindestens ein ablativ wirkendes Brandschutzadditiv enthält.

2. Dämmschichtbildende Zusammensetzung nach Anspruch 1, wobei die Zusammensetzung ferner einen Katalysator für die Reaktion des Epoxidharzes mit der Thioverbindung enthält.

3. Dämmschichtbildende Zusammensetzung nach Anspruch 1 oder 2, wobei die Thioverbindung eine Thiol-funktionalisierte Verbindung ist.

4. Dämmschichtbildende Zusammensetzung nach einem der vorhergehenden Ansprüche, wobei das mindestens eine Epoxidharz und die mindestens eine Thioverbindung multifunktionell sind.

5. Zusammensetzung nach einem der vorhergehenden Ansprüche, wobei das mindestens eine multifunktionelle Epoxidharz durch die Reaktion von Polyhydroxyverbindungen mit Epihalogenhydrinen oder deren Vorläufern erhältlich ist und eine Epoxidäquivalentmasse (EEW) ≤ 550 g/Val aufweist.

6. Zusammensetzung nach Anspruch 5, wobei die Polyhydroxyverbindung unter mehrwertigen Phenolen ausgewählt ist.

7. Zusammensetzung nach Anspruch 6 wobei die aromatische Polyhydroxyverbindung Bisphenol A oder Bisphenol F oder ein Gemisch davon ist.

8. Zusammensetzung nach einem der Ansprüche 3 bis 7, wobei die eine oder mehreren Thiolgruppe(n) der mindestens einen Thiol-funktionalisierte Verbindung an ein Monomer, ein Oligomer oder ein Polymer als Gerüst gebunden sind.

9. Zusammensetzung nach einem der Ansprüche 3 bis 8, wobei die Thiol-funktionalisierte Verbindung aus der Gruppe ausgewählt ist, bestehend aus Glykol-bis(2-mercaptoacetat), Glykol-bis(3-mercaptopropionat), 1,2-Propylenglykol-bis(2-mercaptoacetat), 1,2-Propylenglykol-bis(3-mercaptopropionat), 1,3-Propylenglykol-bis(2-mercaptoacetat), 1,3-Propylenglykol-bis(3-mercaptopropionat), Tris(hydroxymethyl)methan-tris(2-mercaptoacetat), Tris(hydroxymethyl)methan-tris(3-mercaptopropionat), 1,1,1-Tris(hydroxymethyl)ethan-tris(2-mercaptoacetat), 1,1,1-Tris(hydroxymethyl)ethan-tris(3-mercaptopropionat), 1,1,1-Trimethylolpropan-tris(2-mercaptoacetat), ethoxyliertes 1,1,1-Trimethylolpropan-tris(2-mercaptoacetat), propoxyliertes 1,1,1-Trimethylolpropan-tris(2-mercaptoacetat), 1,1,1-Trimethylolpropan-tris(3-mercaptopropionat), ethoxyliertes 1,1,1-Trimethylolpropan-tris(3-mercaptopropionat), propoxyliertes Trimethylolpropan-tris(3-mercaptopropionat), 1,1,1 -Trimethylolpropan-tris(3-mercaptobutyrat), Pentaerythritol-tris(2-mercaptoacetat), Pentaerythritol-tetrakis(2-mercaptoacetat), Pentaerythritol-tris(3-mercaptopropionat), Pentaerythritol-tetrakis(3-mercaptopropionat), Pentaerythritol-tris(3-mercaptobutyrat), Pentaerythritol-tetrakis(3-mercaptobutyrat), 2-Ethylhexylthioglykolat, *iso*-Octylthioglykolat, Di(*n-*butyl)thiodiglykolat, Glykol-di-3-mercaptopropionat, 1,6-Hexandithiol, Ethylenglykol-bis(2-mercaptoacetat) und Tetra(ethylenglykol)dithiol, Capcure 3-800, GPM-800, CeTePox 2200 H.

10. Zusammensetzung nach einem der vorhergehenden Ansprüche, wobei der Bestandteil B ferner mindestens ein Amin als Co-Härtungsmittel enthält.

11. Zusammensetzung nach Anspruch 10, wobei das mindestens eine Amin unter primären und/oder sekundären aliphatischen Aminen und/oder Polyaminen ausgewählt ist.

12. Zusammensetzung nach einem der vorhergehenden Ansprüche, wobei das reaktive Äquivalentverhältnis im Bereich von 0,1:1 bis 10:1 liegt.

13. Zusammensetzung nach einem der Ansprüche 2 bis 12, wobei der Katalysator ein Phenol-Derivat oder ein tertiäres Amin ist.

14. Zusammensetzung nach einem der vorhergehenden Ansprüche, wobei das wenigstens eine ablativ wirkende Brandschutzadditiv aus der Gruppe ausgewählt ist, bestehend aus LiNO₃·3H₂O, Na2CO3H2O (Thermonatrit), Na₂CO₃·7H₂O, Na2CO₃·10H₂O (Soda), Na₂Ca(CO₃)₂·H₂O (Pirssonit), Na₂Ca(CO₃)₂·5H₂O (Gaylussit), Na(HCO3)Na₂CO₃·₂H₂O (Trona), Na₂S₂O₃·5H₂O, Na₂O₃Si·5H₂O, KF·2H₂O, CaBr₂·2H₂O, CaBr₂·6H₂O, CaSO₄·2H₂O (Gips), Ca(SO₄)·½H₂O (Bassanit), Ba(OH)₂·8H₂O, Ni(NO₃)₂·6H₂O, Ni(No₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgSO₄·7H₂O (EP1069172A), Mg(OH)₂, Al(OH)₃, Al(OH)₃·3H₂O, AIOOH (Böhmit), Al₂[SO₄]₃·nH₂O mit n = 14 - 18 (US 4,462,831 B), gegebenenfalls im Gemisch mit AlNH₄(SO₄)₂·12H₂O (US5104917A), KAl(SO₄)₂·12H₂O (EP1069172A), CaO·Al₂O_{3·}10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OH)₆(SO₄)(CO₃)-12H₂O (Artinit), Mg₂(OH)₂CO₃·H₂O (Ettringit), 3CaO·Al₂O₃·3CaSO₄·32H₂O (Hydromagnesit), Mg₅(OH)₂(CO₃)₄·4H₂O (Hydrocalumit), Ca₄Al₂(OH)₁₄·6H₂O (Hydrotalkit), Mg₆Al₂(OH)₁₆CO₃·4H₂O Alumohydrocalcit, CaAl₂(OH)₄(CO₃)₂·3H₂O Scarbroit, Al₁₄(CO₃)₃(OH)₃₆ Hydrogranat, 3CaO·Al₂O₃·6H₂O Dawsonit, NaAl(OH)CO₃, wasserhaltige Zeolithe, Vermikulite, Colemanit, Perlite, Glimmer, Alkalisilikate, Borax, modifizierten Kohlen, Graphiten, Kieselsäuren und Gemischen davon.

15. Zusammensetzung nach einem der vorhergehenden Ansprüche, wobei die Zusammensetzung ferner organische und/oder anorganische Zuschlagstoffe und/oder weitere Additive enthält.

16. Zusammensetzung nach einem der vorhergehenden Ansprüche, die als Zwei- oder Mehrkomponenten-System konfektioniert ist.

17. Verwendung der Zusammensetzung nach einem der Ansprüche 1 bis 16 als Beschichtung.

18. Verwendung nach Anspruch 17 für die Beschichtung von Konstruktionselementen.

19. Verwendung nach Anspruch 17 für die Beschichtung von nicht metallischen Substraten.

20. Verwendung nach einem der Ansprüche 17 bis 19 als Brandschutzschicht, insbesondere für einzelne Kabel, Kabelbündel, Kabeltrassen und Kabelkanäle oder andere Leitungen oder Weichschotts.

21. Gehärtete Objekte, erhalten durch Härten der Zusammensetzung nach einem der Ansprüche 1 bis 16.
